# EUROPEAN PATENT SPECIFICATION

(11) **EP 1 394 028 B1**
(45) Date of publication and mention of the grant of the patent: **20.07.2011**
(21) Application number: 03077698.3
(22) Date of filing: 29.08.2003
(51) Int. Cl.: B62J 6/00

(54) **Bicycle headlamp and assembly comprising such a bicycle headlamp**
Fahrradscheinwerfer und Einheit mit solchem Scheinwerfer
Phare pour bicyclette et ensemble comprenant un tel phare

(30) Priority: 30.08.2002 NL 1021367
(43) Date of publication of application: 03.03.2004
(73) Proprietor: Batavus B.V., 8444 AR Heerenveen (NL)
(72) Inventor: Naberman, André, 8281 MW Genemuiden (NL)
(74) Representative: Prins, Adrianus Willem

(56) References cited:
- WO-A-01/56870
- DE-A- 4 137 323
- DE-A- 19 701 629
- US-A- 5 641 220

## Description

The invention relates to an assembly of a bicycle headlamp and a connecting piece between a stem and a handlebar according to the preamble of claim 1.

Such an assembly according to the preamble of claim 1 is known from WO-A-01/56870.

From practice many other variants of bicyle headlamps are known, which, depending on the embodiment of the fastening means, can be fastened, for instance, near the upper side of the front fork by means of a bolt which also holds a mudguard, above the headset, on a front mudguard or on the handlebar.

Furthermore, DE-A-19701629 discloses some examples in which bicycle headlamps are integrated with (parts of) handlebar assemblies.

A drawback of such headlamps is that they easily damage or at least get shifted or otherwise out of position, for instance when the bicycle falls over when placed in a bicycle shed or during transport of the bicycle.

It is an object of the invention to provide a bicycle headlamp in regard to which the risk of damage or getting inadvertently shifted or out of position is reduced.

According to the invention, this object is achieved by providing an assembly according to claim 1. The headlamp of such an assembly, forms a relatively hardly exposed part. As a result, the risk of damage to the headlamp is limited. Furthermore, the connection along at least the connecting edge forms a stable support for the headlamp, so that also when undergoing inadvertent impacts, it is not easily brought out of position.

Moreover, because the headlamp, in mounted condition, hardly projects from the connecting piece between a stem and a handlebar, the headlamp is, through the reduced risk of damage and the relatively easy manageability of the assembly, very suitable to form with the stem and/or the connecting piece between the stem and the handlebar a premounted assembly which can be delivered to the bicycle manufacturer as one whole and can be mounted during assemblage of a bicycle.

Particularly advantageous embodiments of the invention, i.e. relating to an assembly of a headlamp and a connecting piece between a stem and a handlebar, are laid down in the dependent claims 2-11.

The invention will be illustrated and explained below in more detail on the basis of some exemplary embodiments of the invention with reference to the drawing, in which:
Fig. 1 shows a side view in cross-section along the line I-I in Fig. 2 of an example of an assembly of a headlamp and a connecting piece between a stem and a handlebar; and
Fig. 2 shows a front view of the assembly according to Fig. 1 with a central part of a handlebar, but without a stem with casing shown in Fig. 1;
Fig. 3 shows a perspective view of a part of the housing of the headlamp according to Figs. 1 and 2; and
Fig. 4 forms a side view of an example, not being part of the invention as claimed, of an assembly of a headlamp and a stem with a connecting piece between the stem and a handlebar.

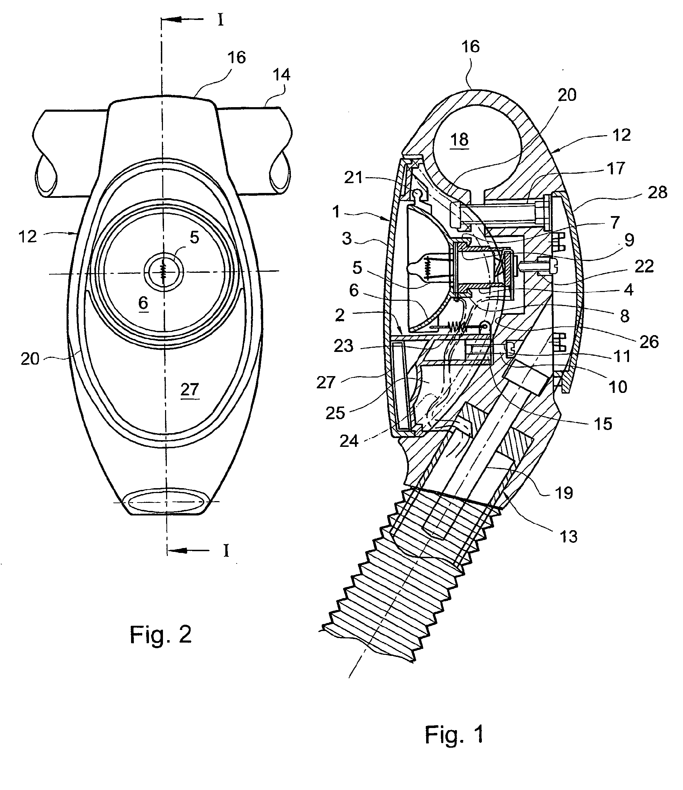

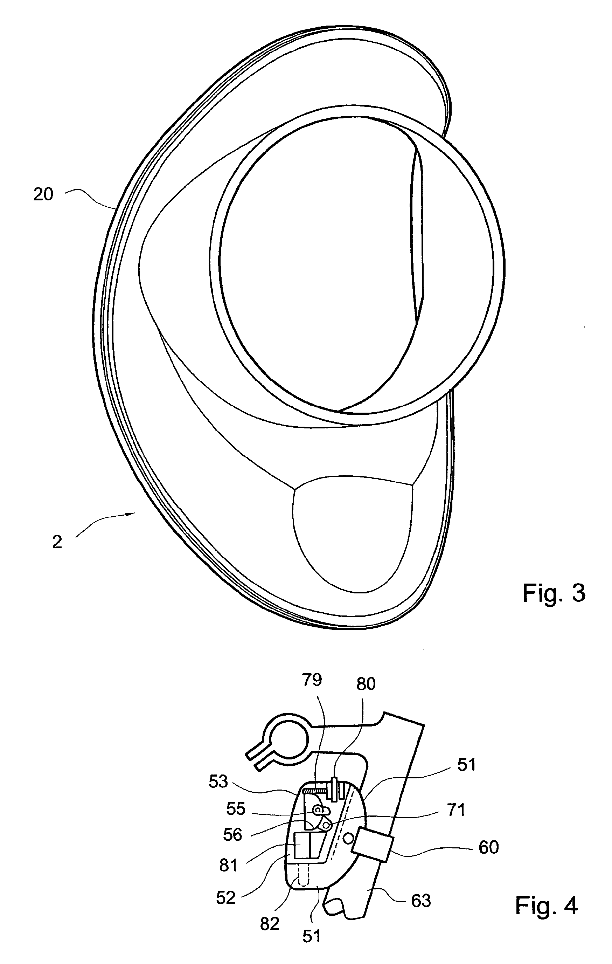

The bicycle headlamp according to the exemplary embodiment of the invention shown in Figs. 1-3 is composed of a headlamp housing consisting of a glass cover 1 of transparent plastic and a support 2 glued therewith, which, on the side of the glass cover 1, is made of chromed plastic. The front side of the glass cover 1 also forms a light passage 3 in the front side of the headlamp housing. Because the glass cover also continues to the side of the headlamp, a jewel-like appearance is obtained in combination with the chromed support, and the headlamp also emits light to the side, which is advantageous to the visibility of the headlamp from the side, especially when it is dark. The support 2 is shown in Fig. 3 as a separate part.

The housing 1, 2 contains a lamp holder 4 with a lamp 5. The lamp holder 4 is suspended in a headlamp reflector 6 arranged and placed to bundle light coming from the lamp 5 in the lamp holder 4 to a light bundle directed outward via the light passage 3. The lamp holder 4 is fixed relative to the reflector 6 by means of a hook finger 7 and a click finger 8, which are integrally formed with the reflector 6, and which hook behind an edge 9 of the lamp holder 4.

Fastening means for fastening the headlamp to a bicycle are formed by a bolt 10, which extends through a recessed hole 11 in a connecting piece 12 between a stem 13 and a handlebar 14, and which is screwed into a nut part 15 anchored in the support 2, so that the support is clamped against the connecting piece 12. Because the fastening means 10 extend through the connecting piece, stable fastening is readily obtained, and the fastening means are not exposed where they may cause a risk of injury and make cleaning difficult.

An upper part of the connecting piece 12 forms a strap 16, which may be clamped around the handlebar 14 by tightening a bolt/nut combination 17 so as to fix the handlebar in a hole 18 in the strap 16. The clamping elements 17 for clamping the strap 16 around the handlebar 14 are at least partly contained in the housing of the headlamp. As a result, the housing protects these elements, which, for instance, may possibly have sharp edges, for instance through slipped tools. The risk of injury is thus further limited.

The stem 13 is fastened in the connecting piece 12 with a force fit. Extra fixation of the connecting piece 12 and the stem 13 relative to each other is provided, in operation, by the tightened expander bolt 19.

Along a connecting edge 20, the housing 1, 2 has a rear side formed complementarily to the outer surface of the connecting piece 12, and the fastening bolt 10 holds the connecting edge 20 of the housing 1, 2 in position against the connecting piece 12. For this cause, if for no other, the headlamp projects little relative to the firm connecting piece 12, and a stable fixation of the headlamp relative to the connecting piece 12 is obtained. The risk of damage to the headlamp or inadvertently bringing it out of position is thus strongly limited. Moreover, the relatively strong connecting piece 12 provides effective protection of the rear side of the headlamp. According to this example, the connecting edge 20 forms the edge of the support 2, which lies against the connecting piece 12. Also other possibilities of embodiment are conceivable. Thus, for instance, the connecting edge may be an edge of a housing wall or housing rib.

The connecting edge 20 of the housing 1, 2 is formed complementarily to the connecting piece 12 over substantially the height of the housing 1, 2. As a result, the risk of objects caught on the upper or lower side of the headlamp is limited. This is also advantageous to further limit the risk of damage to the headlamp. Furthermore, support of the headlamp toward the connecting piece 12 is thus obtained, which further increases the stability of the support.

The headlamp reflector 6 is tiltable relative to the support 2 of the housing about an axis 21, which, in operative condition, is horizontal and runs transversely to the light bundle to be bundled by the headlamp reflector 6. As a result, the inclination of the light bundle bundled by the reflector can be adjusted relative to the housing 1, 2. For the adjustment as such, an adjusting element is provided in the form of an adjusting screw 22, which is screwed into the connecting piece 12, and which, via the rear side of the lamp holder 4, presses the reflector 6 forward against a backward force exerted by a tension spring 23 between the reflector 6 and the support 2. By turning in the adjusting screw 22, the light bundle is adjusted upward, and by turning out the adjusting screw, the light bundle is adjusted downward. The spring 23 thus removes play from the pivotable suspension 21 and from the fit between the screw 22 and the connecting piece 12, so that free movement of the reflector 6, which expresses itself in disturbing movements of the light bundle, is prevented.

Because the adjusting element 22 extends through and is anchored in the connecting piece 12, it is not necessary to make provisions in the housing of the headlamp for receiving and supporting the adjusting element, but the connecting piece 12 performs this receiving and supporting function.

The adjustability of the reflector 6 relative to the housing has the advantage that the orientation of the housing need not be adjustable, so that it can be readily and reliably fixed to a strong part of the bicycle, as in this example the connecting piece 12. The adjustable reflector 6 is located in the housing and is thus protected against the action of forces from outside.

Below the light passage 3 for transmitting the light bundle, a further reflector 27 is located for reflecting light of headlamps of oncoming traffic.

The feature that, over some height, the housing 1, 2 is fixed complementarily to and against the connecting piece 12 is further utilized because electric feeding wires 24 for passing current to the lamp 5 are passed to the housing 1, 2, without it being locally exposed to the environment. To this end, the feeding wire 24 runs through a passage 25 within the connecting edge 20. This renders it possible to lead the feeding wire 24 from the housing 1, 2 directly to the connecting piece 12 located therebehind, without it first running through the environment. If the lamp is fastened against a stem, the feeding wire can run from the housing directly into the stem, without exposure of a part of the feeding wire.

The connecting piece 12 has an, in operation, forward facing side (in Fig. 1 the left side) with, at least in side view, a hollow space 26. A part of the headlamp is located in that hollow space 26. As a result, a further limited degree of projection of the headlamp and a corresponding limitation of the risk of damage is obtained. Moreover, the protecting effect of the connecting piece 12 is thus further increased.

Also conducive to these effects is that the connecting edge 20 of the housing 1, 2 is formed complementarily to the hollow space 26. The connecting edge thus connects to the hollow space, so that the whole connecting area in which the headlamp and the hollow space 26 connect to each other is located in the hollow space 26. The headlamp therefore does not project from parts of the connecting piece 12 located outside the hollow space 26.

According to this example, the hollow space 26 is obtained in an efficient manner because the connecting piece 12, in an, in operation, forward direction, runs away from the stem 13 along the hollow space 26 in a curved line to the end 16, remote from the stem 13, for holding the handlebar 14. The course bent forward for the purpose of positioning the strap 16 for holding the handlebar 14 at a distance before the center line of the stem 13 thus also provides the hollow space 26.

On the, in operation, backward facing side of the connecting piece, a covering cap 28 for covering at least a part of the rear side of the connecting piece 12 is arranged. The covering cap 28 is movable between the operative position shown in Fig. 1, in which it covers operating parts of the fastening means 10 grouped therebelow, the adjusting means 22 and the clamping elements 17, and the shown operative position for providing access to the operating parts. The discussed operating parts are thus easily accessible to the user on the rear side of the connecting piece 12, but the covering cap 28, which, in operation, is placed, ensures that these operating parts, on the side of the connecting piece 12 which, in operation, faces the user, do not cause a risk of injury to the user.

At the connecting piece 12 according to this example, the removal of the covering cap from the position of use can be realized by pulling loose the covering cap 28. However, another solution, such as a hingedly suspended covering cap, may also be used for this purpose.

In Fig. 4, an example, not being part of the invention as claimed, is shown more schematically. According to this example, the headlamp has a housing with a fixed housing part 51 with a rear side which is formed complementarily to a stem 63 (in general a body with a constant and mostly cylindrical cross-section) and is clamped against the stem 63 by a fastening strap 60 with the rear side, or at least connecting edge thereof, formed complementarily to the stem 63. According to this example, the mentioned rear side formed complementarily to the stem has a recess which is formed complementarily to a cylinder segment, so that a part of the stem 63 falls into the recess when the headlamp is fastened against the stem. A second housing part 52 detachable from the first housing part 51 is provided with a light passage 53 for transmitting light coming from a lamp 55, which is bundled by a reflector 56 included with the lamp 55 in the second housing part 52.

Also according to this example, the reflector 56 is tiltable about a horizontal axis 71 transversely to the direction in which the reflector 56 can bundle light for adjusting the inclination of the emitted light bundle. To this end, according to this example, a thread 79 is suspended in the housing so as to be rotatable about its center line and engages a nut at the top of the reflector 56. To cause the thread 79 to turn, it is coupled to a thumb wheel 80 extending outside the housing.

Furthermore, batteries 81 for feeding the lamp 55 are located in the second housing part 52. Contact pins 82 projecting from the second housing part 52 can be inserted in a battery charger for charging the batteries 81 when the second housing part 52 is detached from the first housing part 51. To this end, the first housing part 51 and the second housing part 52 are provided with interengaging coupling elements.

In case the headlamp is intended for mounting afterwards, it may be advantageous if an exchangeable intermediate piece or fitting piece forms part of the housing, for instance for connection to stems of different diameters.

## Claims

1. An assembly of a bicycle headlamp and a connecting piece (12) between a stem (13) and a handlebar (14), the bicycle headlamp comprising:
a headlamp housing (1, 2),
a light passage (3) in a front side of the headlamp housing (1, 2),
a lamp holder (4),
a headlamp reflector (6) arranged and placed to bundle light coming from a lamp in the lamp holder (4) to a light bundle directed outward via the light passage (3), and
fastening means (10, 15) for fastening the headlamp to a bicycle,
wherein the housing (1, 2) has a rear side which, at least along a connecting edge (20), is formed complementarily to said connecting piece (12), and wherein the fastening means (10, 15) are arranged to hold at least said connecting edge (20) of said housing (1, 2) in position against said connecting piece (12) between a stem (13) and a handlebar (14),
**characterized in that** said connecting piece (12) has an, in operation, forward facing side with, at least in side view, a hollow space (26) for receiving at least part of said headlamp.

2. An assembly according to claim 1, wherein at least said connecting edge (20) of said housing (1, 2), over substantially the height of the housing (1, 2), is formed complementarily to said connecting piece (12) between a stem (13) and a handlebar (14).

3. An assembly according to claim 1 or 2, wherein the headlamp reflector (6) is tiltable relative to the housing (1, 2) about an, in operating condition, horizontal axis (21) transversely to the light bundle to be bundled by the headlamp reflector (6) for adjusting relative to the housing (1, 2) the inclination of the light bundle bundled by the headlamp reflector (6), further comprising an adjusting element (22) for adjusting the position of the headlamp reflector (6) relative to the housing (1, 2) and for holding the headlamp reflector (6) in the adjusted position relative to the housing (1, 2).

4. An assembly according to claim 3, wherein the adjusting element (22) extends through said connecting piece (12) and is anchored in said connecting piece (12).

5. An assembly according to any one of the preceding claims, further comprising electric feeding wires (24) for passing current to a lamp (5) in the lamp holder (4), said feeding wires running through a passage within said connecting edge (20).

6. An assembly according to any one of the preceding claims, wherein at least said connecting edge (20) of said housing (1, 2) is formed complementarily to said hollow space (26).

7. An assembly according to claim 6, wherein, when at least part of said headlamp is received in said hollow space (26), said connecting edge (20) runs along a circumferential edge of said hollow space (26).

8. An assembly according to claim 6 or 7, wherein said connecting piece (12), in an, in operation, forward direction, runs away from said stem (13) along said hollow space (26) in a curved line to the end (16), remote from the stem (13), for holding a handlebar (14).

9. An assembly according to any one of the preceding claims 1-4, wherein the fastening means (10, 15) extend through said connecting piece (12).

10. An assembly according to any one of the preceding claims, wherein the connecting piece (12) has a strap (16) for clamping a handlebar (14), and wherein clamping elements (17) for clamping said strap around said handlebar (14) are located at least partly in said housing (1, 2).

11. An assembly according to any one of the preceding claims, further comprising a covering cap (28) for covering at least a part of the rear side of the connecting piece (12), which covering cap (28) is movable between an operating condition in which said operating parts of said fastening means (10, 15) cover said adjusting means (22) and said clamping elements (17) and is movable from said operating position for providing access to said operating parts.

## Patentansprüche

1. Eine Baugruppe aus einem Fahrradscheinwerfer und einem Verbindungsstück (12) zwischen einer Stange (13) und einem Lenker (14), wobei der Fahrradscheinwerfer umfasst:
ein Scheinwerfergehäuse (1, 2),
einen Lichtdurchlass (3) in einer Vorderseite des Scheinwerfergehäuses (1 , 2),
eine Lampenhalterung (4),
einen Scheinwerferreflektor (6), der angeordnet und platziert ist, um Licht, das von einer Lampe in der Lampenhalterung (4) kommt, zu einem Lichtbündel zu bündeln, das nach außen durch den Lichtdurchlass (3) gerichtet ist, und
Befestigungsmittel (10, 15) zum Befestigen des Scheinwerfers an einem Fahrrad,
wobei das Gehäuse (1, 2) eine Rückseite aufweist, die wenigstens entlang einer Verbindungskante (20) zu dem Verbindungsstück (12) komplementär ausgebildet ist, und wobei die Befestigungsmittel (10, 15) zum Halten zumindest der Verbindungskante (20) des Gehäuses (1, 2) in Position gegen das Verbindungsstück (12) zwischen einer Stange (13) und einem Lenker (14) angeordnet ist,
**dadurch gekennzeichnet, dass** das Verbindungsstück (12) eine im Betrieb nach vorne gerichtete Seite mit einem zumindest in der Seitenansicht hohlen Raum (26) zur Aufnahme von zumindest einem Teil des Scheinwerfers aufweist.

2. Eine Baugruppe nach Anspruch 1, wobei zumindest die Verbindungskante (20) des Gehäuses (1, 2) über im Wesentlichen die Höhe des Gehäuses (1, 2) komplementär zu dem Verbindungsstück (12) zwischen einer Stange (13) und einem Lenker (14) gebildet ist.

3. Eine Baugruppe nach Anspruch 1 oder 2, wobei der Scheinwerferreflektor (6) relativ zu dem Gehäuse (1, 2) um eine im Betriebszustand horizontale Achse (21) quer zu dem durch den Scheinwerferreflektor (6) zu bündelnden Lichtbündel geneigt werden kann, um die Neigung des durch den Scheinwerferreflektor (6) gebündelten Lichtbündels relativ zum Gehäuse einzustellen, des Weiteren umfassend ein Einstellelement (22), um die Position des Scheinwerferreflektors (6) relativ zum Gehäuse (1, 2) einzustellen und um den Scheinwerferreflektor (6) relativ zum Gehäuse (1, 2) in der eingestellten Position zu halten.

4. Eine Baugruppe nach Anspruch 3, wobei das Einstellelement (22) sich durch das Verbindungsstück (12) erstreckt und in dem Verbindungsstück (12) verankert ist.

5. Eine Baugruppe nach irgendeinem der vorhergehenden Ansprüche, die des Weiteren elektrische Versorgungsdrähte (24) zur Zufuhr von elektrischem Strom an eine Lampe (5) in der Lampenhalterung (4) umfasst, wobei die Versorgungsdrähte durch einen Durchlass innerhalb der Verbindungskante (20) verlaufen.

6. Eine Baugruppe nach irgendeinem der vorhergehenden Ansprüche, wobei zumindest die Verbindungskante (20) des Gehäuses (1, 2) zu dem hohlen Raum (26) komplementär ausgebildet ist.

7. Eine Baugruppe nach Anspruch 6, wobei zumindest ein Teil des Scheinwerfers in dem hohlen Raum (26) aufgenommen ist, wobei die Verbindungskante (20) entlang einer Umfangskante des hohlen Raums (26) verläuft.

8. Eine Baugruppe nach Anspruch 6 oder 7, wobei das Verbindungsstück (12) in einer im Betrieb nach vorne gerichteten Richtung von der Stange (13) weg entlang des hohlen Raumes (26) In einer gebogenen Linie bis zu dem von der Stange (13) entfernten Ende (16) verläuft, um einen Lenker (14) zu halten.

9. Eine Baugruppe nach irgendeinem der vorhergehenden Ansprüche 1-4, wobei die Befestigungsmittel (10, 15) sich durch das Verbindungsstück (12) erstrecken.

10. Eine Baugruppe nach Irgendeinem der vorhergehenden Ansprüche, wobei das Verbindungsstück (12) eine Schelle (16) zum Einklemmen eines Lenkers (14) aufweist, und wobei Klemmelemente (17) zum Klemmen der Schelle um den Lenker (14) sich zumindest teilweise in dem Gehäuse (1, 2) befinden.

11. Eine Baugruppe nach irgendeinem der vorhergehenden Ansprüche, die des Weiteren eine Abdeckkappe (28) zum Abdecken zumindest eines Teils der Rückseite des Verbindungsstücks (12) umfasst, wobei die Abdeckkappe (28) beweglich ist zwischen einem Betriebszustand, bei dem die Bedienteile der Befestigungsmittel (10, 15) die Einstellmittel (22) und die Klemmelemente (17) abdecken, und aus der Betriebsposition beweglich ist, um Zugang zu den Bedienteilen zu schaffen.

## Revendications

1. Ensemble de phare de bicyclette et pièce de raccordement (12) entre une potence (13) et un guidon (14), le phare de bicyclette comprenant :
un boîtier de phare (1, 2),
un passage de lumière (3) sur une face avant du boîtier de phare (1, 2),
une douille (4),
un réflecteur de phare (6) agencé et placé pour regrouper la lumière provenant d'une ampoule dans la douille (4) en un faisceau lumineux dirigé vers l'extérieur par l'intermédiaire du passage de lumière (3), et
un moyen de fixation (10, 15) destiné à fixer le phare à une bicyclette,
dans lequel le boîtier (1, 2) a une face arrière qui, au moins le long d'un bord de raccordement (20), est formé de façon complémentaire à ladite pièce de raccordement (12), et dans lequel le moyen de fixation (10, 15) est agencé pour maintenir au moins ledit bord de raccordement (20) dudit boîtier (1, 2) en position contre ladite pièce de raccordement (12) entre une potence (13) et un guidon (14),
**caractérisé en ce que** ladite pièce de raccordement (12) a, en fonctionnement, une face orientée vers l'avant ayant, au moins en vue latérale, un espace vide (26) destiné à recevoir au moins une partie dudit phare.

2. Ensemble selon la revendication 1, dans lequel au moins ledit bord de raccordement (20) dudit boîtier (1, 2), sur globalement la hauteur du boîtier (1, 2), est formé de façon complémentaire à ladite pièce de raccordement (12) entre une potence (13) et un guidon (14).

3. Ensemble selon la revendication 1 ou 2, dans lequel le réflecteur de phare (6) est inclinable par rapport au boîtier (1, 2), en condition de fonctionnement, autour d'un axe horizontal (21) transversalement au faisceau lumineux devant être regroupé par le réflecteur de phare (6) pour régler par rapport au boîtier (1, 2) l'inclinaison du faisceau lumineux regroupé par le réflecteur de phare (6), comprenant de plus un élément de réglage (22) destiné à régler la position du réflecteur de phare (6) par rapport au boîtier (1, 2) et destiné à maintenir le réflecteur de phare (6) dans la position réglée par rapport au boîtier (1, 2).

4. Ensemble selon la revendication 3, dans lequel l'élément de réglage (22) s'étend à travers ladite pièce de raccordement (12) et est ancré dans ladite pièce de raccordement (12).

5. Ensemble selon l'une quelconque des revendications précédentes, comprenant en outre des fils d'alimentation électrique (24) destinés à transmettre du courant à une ampoule (5) dans la douille (4), lesdits fils d'alimentation courant à travers un passage dans ledit bord de raccordement (20).

6. Ensemble selon l'une quelconque des revendications précédentes, dans lequel au moins ledit bord de raccordement (20) dudit boîtier (1, 2) est formé de façon complémentaire audit espace vide (26).

7. Ensemble selon la revendication 6 dans lequel, lorsque au moins une partie dudit phare est reçue dans ledit espace vide (26), ledit bord de raccordement (20) s'étend le long d'un bord circonférentiel dudit espace vide (26).

8. Ensemble selon la revendication 6 ou 7, dans lequel ladite pièce de raccordement (12), en fonctionnement, dans une direction vers l'avant, s'éloigne de ladite potence (13) le long dudit espace vide (26) en une ligne courbe vers l'extrémité (16), à distance de la potence (13) pour maintenir un guidon (14).

9. Ensemble selon l'une quelconque des revendications 1 à 4 précédentes, dans lequel le moyen de fixation (10, 15) s'étend à travers ladite pièce de raccordement (12).

10. Ensemble selon l'une quelconque des revendications précédentes, dans lequel la pièce de raccordement (12) a une bride (16) destinée à serrer un guidon (14) et dans lequel un élément de serrage (17) destiné à serrer ladite bride autour dudit guidon (14) est situé au moins en partie dans ledit boîtier(1, 2).

11. Ensemble selon l'une quelconque des revendications précédentes, comprenant en outre un bouchon de protection (28) destiné à couvrir au moins une partie de la face arrière de la pièce de raccordement (12), lequel bouchon de protection (28) peut être déplacé entre une position de fonctionnement dans laquelle lesdites pièces de fonctionnement dudit moyen de fixation (10, 15) couvrent ledit moyen de réglage (22) et ledit élément de serrage (17) et peut être déplacé depuis ladite position de fonctionnement pour permettre un accès auxdites pièces de fonctionnement.
